Europäisches Patentamt

European Patent Office

Office européen des brevets

(19)

(11) **EP 0 700 536 B1**

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(51) Int Cl.⁶: **G05B 13/02**, G05B 19/05

(86) Internationale Anmeldenummer:
**PCT/DE94/00575**

(21) Anmeldenummer: **94915042.9**

(22) Anmeldetag: **18.05.1994**

(87) Internationale Veröffentlichungsnummer:
**WO 94/28470 (08.12.1994 Gazette 1994/27)**

(54) **REGELEINRICHTUNG**

REGULATING DEVICE

DISPOSITIF DE REGULATION

(84) Benannte Vertragsstaaten:
**AT BE CH DE DK ES FR GB IT LI LU NL PT SE**

(30) Priorität: **26.05.1993 DE 4317538**

(43) Veröffentlichungstag der Anmeldung:
**13.03.1996 Patentblatt 1996/11**

(73) Patentinhaber: **SIEMENS AKTIENGESELLSCHAFT**
**80333 München (DE)**

(72) Erfinder: **HALLWIRTH, Volker**
**D-78112 St. Georgen (DE)**

(56) Entgegenhaltungen:
**EP-A- 0 481 492          DE-A- 3 743 438**

- **AUTOMATISIERUNGSTECHNIK - AT, Bd.41, Nr.5, Mai 1993, MUNCHEN DE Seiten 180 - 184 T.BERTRAM ET AL 'ZUR KOMPENSATION DER TROCKENEN REIBUNG MIT HILFE DER FUZZY-LOGIK'**
- **PROCEEDINGS OF THE 1991 AMERICAN CONTROL CONFERENCE, Bd.1, 26. Juni 1991, BOSTON,USA Seiten 821 - 826 S.CHIU ET AL 'FUZZY CONTROLLER DESIGN AND STABILITY ANALYSIS FOR AN AIRCRAFT MODEL'**
- **1993 IEEE INTERNATIONAL CONFERENCE ON NEURAL NETWORKS, Bd.2, 28. März 1993, SAN FRANCISCO,USA Seiten 610 - 619 P.BONISSONE ET AL 'FUZZY LOGIC CONTROLLERS: FROM DEVELOPMENT TO DEPLOYMENT'**
- **FUZZY SETS AND SYSTEMS, Bd.47, Nr.1, April 1992, AMSTERDAM NL Seiten 13 - 21 W.QIAO ET AL 'A RULE SELF-REGULATING FUZZY CONTROLLER'**

EP 0 700 536 B1

**Beschreibung**

Die Erfindung betrifft eine Regeleinrichtung mit einer Vergleichseinrichtung, welche eine Regeldifferenz aus einer Führungsgröße und einer Regelgröße ermittelt, und mit einer der Vergleichseinrichtung nachgeordneten Korrektur- und Stelleinrichtung, welche eine Stellgröße einer Regelstrecke ermittelt.

Es ist bekannt, zur Lösung von Regelungsaufgaben, z. B. zur Regelung einer Drehzahl eines Motors, Regeleinrichtungen einzusetzen. Die Drehzahl (Regelgröße) des Motors wird von einer Meßeinrichtung der Regeleinrichtung erfaßt und einer Vergleichseinrichtung zugeführt. Aus dieser erfaßten Regelgröße und einer einer Soll-Drehzahl entsprechenden Führungsgröße bildet die Vergleichseinrichtung eine Regeldifferenz, aus der eine Korrektur- und Stelleinrichtung eine Stellgröße erzeugt, welche auf eine Regelstrecke einwirkt und die gewünschte Verstellung der Regelgröße bewirkt.

Die beschriebene Regelungsaufgabe kann auch eine speicherprogrammierbare Steuerung mit einem entsprechenden dafür vorgesehenen Programm lösen. Zunächst wird die in analoger Form vorliegende Regelgröße abgetastet und in eine digitale Form umgewandelt. Anschließend berechnet die speicherprogrammierbare Steuerung aus dieser Regelgröße und der Führungsgröße die Regeldifferenz sowie nach Maßgabe eines Regelalgorithmus aus der Regeldifferenz die Stellgröße, welche nach einer Umwandlung in eine analoge Größe ausgegeben wird. Eine solche Lösung mit einer gewöhnlichen speicherprogrammierbaren Steuerung hat den Nachteil, daß die einzelnen Anweisungen des Regelungsprogramms aus einem Speicher nach und nach ausgelesen, interpretiert und schließlich die entsprechenden Operationen ausgeführt werden. Die Zeitspanne, die zur Bearbeitung des Regelungsprogramms benötigt wird, bestimmt die Abtastzeitpunkte, zu denen die Führungsgröße und die Regelgröße abgetastet werden. Außerdem muß die Genauigkeit, mit der die Regelgröße von der analogen in die digitale Form umgewandelt wird, der gewünschten Regelgenauigkeit entsprechen. Im übrigen sind individuelle Anpassungen der Regeleinrichtung (adaptive Regeleinrichtung) an die Eigenschaften der Regelstrecke meist nur durch Vergrößerung der Abtastzeit möglich.

Diese Nachteile werden zwar von Fuzzy-Reglern teilweise beseitigt, jedoch wirken sich auch hier hohe Abtastzeiten nachteilig aus; denn die Momentanwerte der Führungs- und Regelgröße werden zunächst in Wahrheitswerte überführt, wozu der numerische Wertebereich der betrachteten Größen durch linguistische Werte charakterisiert und durch eine Zugehörigkeitsfunktion beschrieben wird (Fuzzifizierung). Schließlich werden die linguistischen Regeln bearbeitet sowie die Zugehörigkeitsfunktion in einen repräsentativen Zahlenwert der Stellgröße y rückübersetzt (Defuzzifizierung).

Aus der DE-OS 37 43 438 ist ein Verfahren zum Erzeugen von Steuersignalen in Abhängigkeit von Eingangssignalen mittels eines endlichen Automaten bekannt. Der Datenspeicher des Automaten ist in Bereiche unterteilt, welche je einem Momentanzustand zugeordnet sind und aus mehreren Teilbereichen bestehen. Diese sind jeweils einem Eingangsvektor zugeordnet, wobei die Eingangsvektoren die für den jeweiligen Momentanzustand relevanten Kombinationen der für den Momentanzustand relevanten Eingangsgrößen sind. Aus der Gesamtheit der aktuellen eingehenden Eingangsgrößen werden die für den jeweiligen Momentanzustand relevanten Eingangsgrößen als aktuelle Eingangsvektoren ausgewählt, und es wird der Teilbereich des Datenspeichers ausgelesen, der in dem dem Momentanzustand zugeordneten Bereich enthalten und dem aktuellen Eingangsvektor zugeordnet ist. Dadurch wird die Reaktionszeit auf Zustandsänderungen der Eingangsgrößen verkürzt.

Der vorliegenden Erfindung liegt die Aufgabe zugrunde, eine Regeleinrichtung der eingangs genannten Art zu schaffen, welche auf eine Stellgröße schnell einwirkt.

Diese Aufgabe wird durch die im kennzeichnenden Teil des Anspruchs 1 angegebenen Maßnahmen gelöst.

Weitere vorteilhafte Ausgestaltungen der Erfindung ergeben sich aus den Unteransprüchen.

Die erfindungsgemäße Regeleinrichtung ist insbesondere für eine speicherprogrammierbare Zustandssteuerung vorgesehen.

Anhand der Zeichnung, in der ein Ausführungsbeispiel der Erfindung veranschaulicht ist, werden die Erfindung, deren Ausgestaltungen sowie Vorteile näher erläutert.

Es zeigen:

Figur 1    eine Regeleinrichtung,
Figur 2    die Zuordnung von Digitalvektoren zu relativen Abweichungen von Analoggrößen innerhalb vorgebbarer Wertebereiche,
Figur 3    die Darstellung einer Zustandsebene,
Figur 4    den zeitlichen Verlauf der Führungs- und Regelgröße während eines Regelvorgangs in der Regeleinrichtung gemäß Figur 1 und
Figur 5    die Darstellung von Zustandsübergängen während des Regelvorgangs.

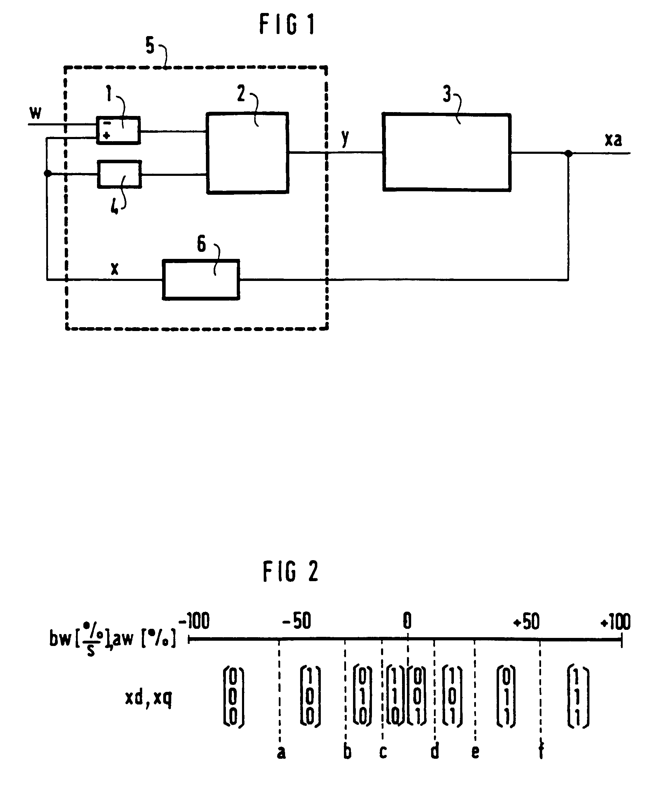

In Figur 1 ist mit 1 eine Vergleichseinrichtung einer Regeleinrichtung 5 bezeichnet, die aus einer Führungsgröße w und einer erfaßten Regelgröße x, welche eine Meßeinrichtung 6 aus einer Regelgröße xa ableitet, zu einem Zeitpunkt t eine Regeldifferenz der Form

$$d = kl\,(x(t) - w(t))$$

ermittelt, wobei kl eine konstante Größe darstellt. Eine Einrichtung 4 bildet aus der Regelgröße x zu einem Zeit-

punkt $t + \Delta t$ einen Differenzenquotienten der Form

$$q = \frac{x(t) - x(t - \Delta t)}{\Delta t},$$

welcher einer der Einrichtung 4 und der Vergleichseinrichtung 1 nachgeordneten Korrektur- und Stelleinrichtung 2 zusammen mit der Regeldifferenz d zugeführt wird. Die einen Speicher aufweisende Korrektur- und Stelleinrichtung 2 wählt nach Maßgabe einer in diesem Speicher hinterlegten Regelvorschrift in Abhängigkeit der Regeldifferenz d, des Differenzenquotienten q und eines Momentanzustandes einen Folgezustand aus und wirkt entsprechend diesem Folgezustand auf eine Stellgröße y einer Regelstrecke 3 ein. Dabei wird beim Übergang in diesen Folgezustand eine diesem Zustand zugeordnete, vorab erstellte Funktion ausgeführt, welche einen neuen Wert der Stellgröße y berechnet.

Zur Erläuterung der Regelvorschrift wird zunächst auf Figur 2 verwiesen. Die Figur zeigt die Zuordnung von Digitalvektoren xd, xq zu entsprechenden relativen Abweichungen aw, bw von Analogwerten. Dabei bildet der drei Bit breite Digitalvektor xd die relative Abweichung

$$aw = \frac{d}{w} \cdot 100 \; [\%]$$

innerhalb vorgebbarer Grenzen a, b ... f ab, der ebenfalls drei Bit breite Digitalvektor xq die relative Abweichung

$$bw = \frac{q}{x} \cdot 100 \; [\frac{\%}{s}]$$

innerhalb dieser Grenzen, wobei d die Regeldifferenz, w die Führungsgröße, x die erfaßte Regelgröße, q der Differenzenquotient und s die Zeiteinheit Sekunde bedeuten. Z. B. sind die Digitalvektoren xd, xq mit den Koordinaten (000) den relativen Abweichungen aw, bw der Analoggrößen in einem Bereich von -100 % bis -60 % und die Digitalvektoren xd, xq mit den Koordinaten (111) dem Bereich von +60 % bis +100 % zugeordnet.

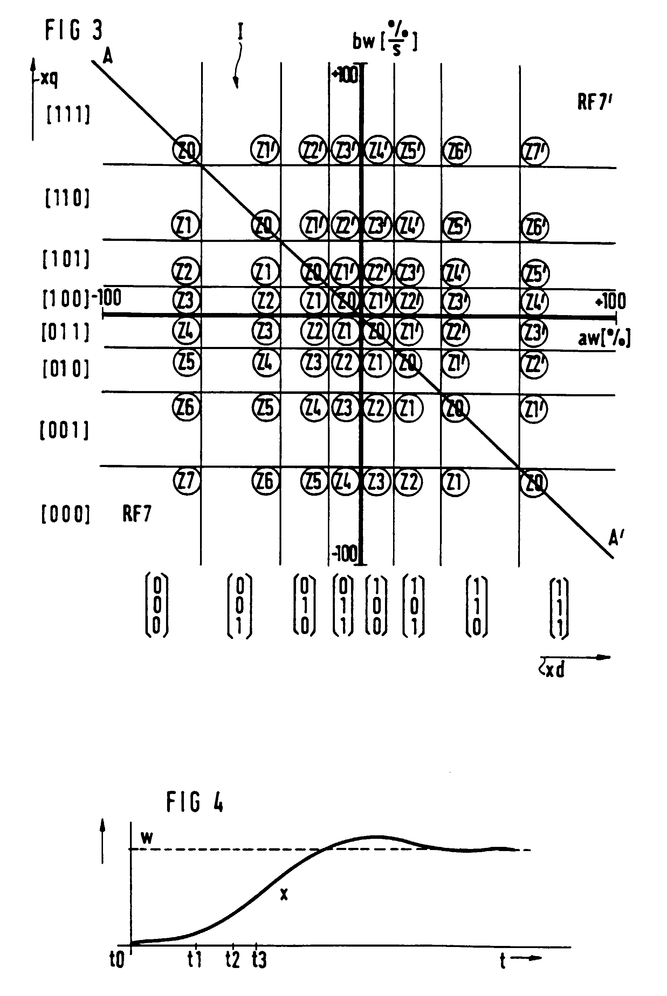

Figur 3 zeigt eine durch die Digitalvektoren xd, xq aufgespannte Zustandsebene. Aufgrund der Kenntnis über das Verhalten der Regelstrecke 3 (Figur 1) sind den Rasterflächen der Zustandsebene Zustände Z0, Z1, Z1', ... zugeordnet, wobei mehreren Rasterflächen derselbe Zustand zugeordnet werden kann. Die Zustände Z1', Z2' ... Z7' sind beispielsweise spiegelsymmetrisch zur Achse A-A' angeordnete Zustände Z1, Z2 ... Z7. Der Zustand Z7 der Rasterfläche RF7 kann z. B. bedeuten "Maximale Stellgröße y zum Hochfahren der Drehzahl eines Motors auf Soll-Drehzahl" und der Zustand Z7' der Rasterfläche RF7' "Maximale Stellgröße y zum Reduzieren der Drehzahl eines Motors auf Soll-Drehzahl".

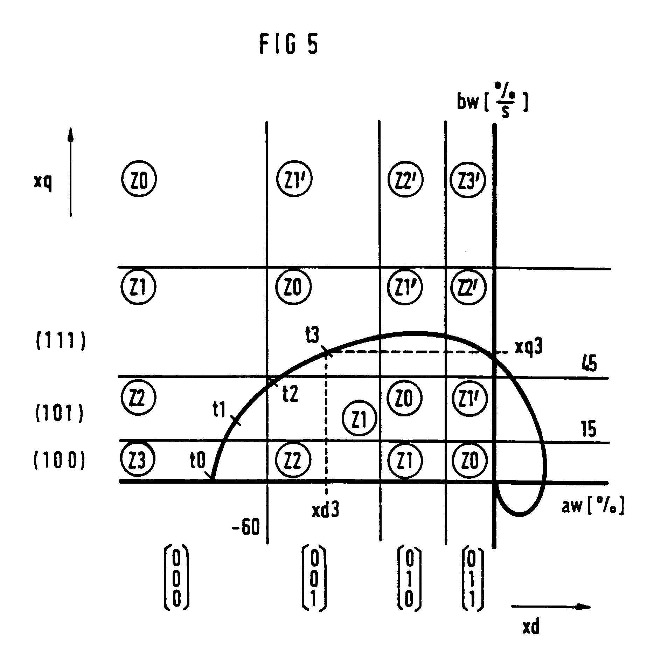

Im folgenden wird - Bezug nehmend auf die Figuren 4 und 5 - die Funktions- und Wirkungsweise der erfindungsgemäßen Regeleinrichtung näher erläutert.

In Figur 5 ist der in Figur 3 mit I bezeichnete Quadrant der Zustandsebene dargestellt, in welchem während eines in Figur 4 gezeigten Regelvorganges Zustandsübergänge zu verschiedenen Zeitpunkten dargestellt sind. Es wird angenommen, daß während des Regelvorgangs die Regelgröße x gemäß der in Figur 4 dargestellten Kurve verläuft und daß zu einem Zeitpunkt t0 der aktuelle Momentanzustand der Zustand Z3 ist (Figur 5). Zu einem Zeitpunkt tl liegt die relative Abweichung aw der Regelgröße x von der Führungsgröße w im Bereich zwischen ca. -60 und ca. -100 %, wodurch die Korrektur- und Stelleinrichtung 2 nach Maßgabe der Regelvorschrift einen dieser Abweichung aw entsprechenden Digitalvektor xd = (000) bildet (Figur 2). Die relative Abweichung bw ermittelt sich aus dem Differenzenquotienten, welcher aus der Regelgröße x zu den Zeitpunkten t0 und t1 zu

$$\frac{x(t1) - x(t1 - t0)}{(t1 - t0)}$$

berechnet wird, und liegt in einem Bereich zwischen ca. +15 und ca. +30 %. Die Korrektur- und Stelleinrichtung 2 bildet dadurch einen Digitalvektor xq = (101) und wählt mit dem zum Zeitpunkt tl gebildeten Digitalvektorpaar xd, xq, ausgehend von dem zum Zeitpunkt t0 gültigen Momentanzustand Z3, den Folgezustand Z2 (Figur 3) aus. Beim Übergang in diesen Folgezustand Z2 wird eine für diesen Zustand entsprechende Funktion ausgeführt, mit welcher ein neuer Wert für die Stellgröße y berechnet wird, beispielsweise entsprechend der Beziehung:

$$y_{Z2} = k2 \cdot y_{Z3},$$

wobei k2 eine positiv reelle Konstante bedeutet. Entsprechend wird zu einem Zeitpunkt t2 mit den gebildeten Digitalvektorpaaren xd/xq = (001)/(101) von dem zum Zeitpunkt t1 gültigen Momentanzustand Z2 in den Folgezustand Z1 übergegangen und ein neuer Wert der Stellgröße y entsprechend der Beziehung

$$y_{Z1} = k3 \cdot y_{Z2},$$

k3 positiv reelle Konstante, berechnet.

Zu einem Zeitpunkt $t3 = t2 + \Delta t$ wechselt die Korrektur- und Stelleinrichtung 2 mit den Digitalvektoren $xd_3/xq_3 = (001)/(110)$ vom Zustand Z1 in den Folgezustand Z0, und es wird während des Zustandsüberganges die diesem Folgezustand entsprechende Funktion im Hinblick auf die Berechnung der Stellgröße y ausgeführt.

Die erfindungsgemäße Regeleinrichtung erlaubt bei jedem Zustandswechsel die Ausführung einer individuell durchführbaren Funktion zur Berechnung eines neuen Wertes der Stellgröße y. Dadurch ergibt sich, daß bei jedem Zustandsübergang die Stellgröße y beliebig manipuliert werden kann, was die Realisierung von schnellen Reglern mit beliebigem Verhalten erlaubt. Es sind Regeleinrichtungen zu verwirklichen, welche die Eigenschaft haben, weitestgehend unabhängig von der Regelstrecke zu sein und die eine erheblich kürzere Zeit zum Berechnen der Stellgröße im Vergleich zu bekannten speicherprogrammierbaren Steuerungen benötigen. Gegenüber konventionellen Regeleinrichtungen ergibt sich der weitere Vorteil, daß die Bindung des Reglers an ein exaktes PID-Verhalten mit entsprechender Parametereinstellung kp, ki, kd aufgehoben ist. Die Regelvorschrift läßt sich vereinfacht folgendermaßen beschreiben:

Wenn sich die Regeleinrichtung zum Zeitpunkt ti in einem Zustand Zi(t) befindet und sie zu einem Zeitpunkt tk = ti + Δt ein neu geordnetes digitales Eingangsvektorpaar xdk, xqk abtastet, so geht die Regeleinrichtung in einen dem neuen Eingangsvektorpaar zugeordneten Folgezustand Zk über und bildet mittels einer beliebig wählbaren, vorab im Speicher der Regeleinrichtung hinterlegten Funktion fk eine neue Stellgröße yk. Das "Wissen" über das nichtlineare Verhalten einer Regelstrecke kann in der Regeleinrichtung berücksichtigt werden.

**Patentansprüche**

1. Regeleinrichtung mit

   - einer Vergleichseinrichtung (1), welche eine Regeldifferenz (d) aus einer Führungsgröße (w) und einer Regelgröße (x) ermittelt,
   - einer der Vergleichseinrichtung (1) nachgeordneten Korrektur- und Stelleinrichtung (2), welche eine Stellgröße (y) einer Regelstrecke (3) ermittelt, und
   - einer Einrichtung (4), welche aus der Regelgröße (x) einen Differenzenquotienten (q) ermittelt und der Korrektur- und Stelleinrichtung (2) zuführt,

   **dadurch gekennzeichnet**,

   - daß eine Momentan- und Folgezustände (Z0, Z1, ...) aufweisende Zustandsebene vorgesehen ist, wobei die Zustände (Z0, Z1, ...) durch die Korrektur- und Stelleinrichtung (2) anwählbar sind,
   - daß die Korrektur- und Stelleinrichtung (2) jeweils einem vorgebbaren Wertebereich der Regeldifferenz (d) und des Differenzenquotienten (q) Koordinaten zuordnet und
   - daß die Korrektur- und Stelleinrichtung (2) in Abhängigkeit der Koordinaten und eines aktuellen Momentanzustandes (Z0, Z1, ...) einen Folgezustand (Z0, Z1, ...) auswählt und entsprechend diesem Folgezustand (Z0, Z1, ...) auf die Stellgröße (y) einwirkt.

2. Regeleinrichtung nach Anspruch 1, **dadurch gekennzeichnet**,

   - daß die Einwirkung auf die Stellgröße (y) entsprechend dem Folgezustand (Z0, Z1, ...) mittels einer vorab erstellten Funktion durchgeführt wird.

**Claims**

1. Control device having

   - a comparison device (1) which determines a system deviation (d) from a reference variable (w) and a controlled variable (x),
   - a correcting and adjusting device (2) which is arranged downstream of the comparison device (1) and determines a correcting variable (y) of a controlled system (3), and
   - a device (4) which from the controlled variable (x) determines a difference quotient (q) and feeds this to the correcting and adjusting device (2),

   characterised

   - in that a state plane is provided that has instantaneous and follow-on states (Z0, Z1, ...), with it being possible to select the states (Z0, Z1, ...) by means of the correcting and adjusting device (2),
   - in that the correcting and adjusting device (2) associates coordinates with respective preselectable ranges of values pertaining to the system deviation (d) and the difference quotient (q), and
   - in that the correcting and adjusting device (2) selects a follow-on state (Z0, Z1, ...) as a function of the coordinates and a current instantaneous state (Z0, Z1, ...) and acts upon the correcting variable (y) in accordance with this follow-on state (Z0, Z1, ...).

2. Control device according to claim 1, characterised

   - in that the action upon the correcting variable (y) is carried out in accordance with the follow-on state (Z0, Z1, ...) by means of a function created in advance.

**Revendications**

1. Dispositif de régulation comportant

   - un dispositif de comparaison (1), qui détermine une différence de régulation (d) à partir d'une grandeur de commande (w) et d'une grandeur réglée (x),
   - un dispositif de correction et de réglage (2), qui est placé en aval du dispositif de comparaison (1) et qui détermine une grandeur réglante (y) d'un système réglé (3), et
   - un dispositif (4) qui détermine à partir de la grandeur réglée (x) un quotient de différence (q) et qui l'envoie au dispositif de correction et de réglage (2),

   caractérisé par le fait

   - qu'il est prévu un plan d'état comportant des états instantanés et des états suivants (Z0, Z1, ...), les états (Z0, Z1, ...) pouvant être sélectionnés par le dispositif de correction et de réglage (2),
   - que le dispositif de correction et de réglage (2) associe des coordonnées à chaque domaine de valeurs pouvant être prescrit pour la différence de régulation (d) et pour le quotient de différence (q) et
   - que le dispositif de correction et de réglage (2) sélectionne un état suivant (Z0, Z1, ...) en fonction des coordonnées et d'un état instantané actuel (Z0, Z1, ...) et agit en fonction de cet état suivant (Z0, Z1, ...) sur la grandeur réglante (y).

2. Dispositif de régulation selon la revendication 1, caractérisé par le fait

   - que l'action sur la grandeur réglante (y) selon l'état suivant (Z0, Z1, ...) est mise en oeuvre au moyen d'une fonction élaborée au préalable.

## FIG 1

## FIG 2

$bw\left[\frac{\%}{s}\right]$, aw [%]

-100    -50    0    +50    +100

xd, xq

$\begin{pmatrix}0\\0\\0\end{pmatrix}$  $\begin{pmatrix}1\\0\\0\end{pmatrix}$  $\begin{pmatrix}0\\1\\0\end{pmatrix}$  $\begin{pmatrix}1\\1\\0\end{pmatrix}$  $\begin{pmatrix}0\\0\\1\end{pmatrix}$  $\begin{pmatrix}1\\0\\1\end{pmatrix}$  $\begin{pmatrix}0\\1\\1\end{pmatrix}$  $\begin{pmatrix}1\\1\\1\end{pmatrix}$

a    b    c    d    e    f

FIG 3

$x_q$

$I$   bw [%/s]   RF 7'

[111]   +100

Z0  Z1'  Z2' Z3' Z4' Z5'  Z6'   Z7'

[110]

Z1  Z0  Z1' Z2' Z3' Z4'  Z5'   Z6'

[101]

Z2  Z1  Z0 Z1' Z2' Z3'  Z4'   Z5'

[100] -100  Z3  Z2  Z1 Z0 Z1' Z2'  Z3'  Z4'  +100

[011]  Z4  Z3  Z2 Z1 Z0 Z1'  Z2'   Z3'   aw [%]

[010]  Z5  Z4  Z3 Z2 Z1 Z0  Z1'   Z2'

[001]  Z6  Z5  Z4 Z3 Z2 Z1  Z0   Z1'

[000]  RF7   Z7  Z6  Z5 Z4 Z3 Z2  Z1   Z0   A'

-100

$\begin{bmatrix} 0 \\ 0 \\ 0 \end{bmatrix}$  $\begin{bmatrix} 0 \\ 0 \\ 1 \end{bmatrix}$  $\begin{bmatrix} 0 \\ 1 \\ 0 \end{bmatrix}$  $\begin{bmatrix} 0 \\ 1 \\ 1 \end{bmatrix}$  $\begin{bmatrix} 1 \\ 0 \\ 0 \end{bmatrix}$  $\begin{bmatrix} 1 \\ 0 \\ 1 \end{bmatrix}$  $\begin{bmatrix} 1 \\ 1 \\ 0 \end{bmatrix}$  $\begin{bmatrix} 1 \\ 1 \\ 1 \end{bmatrix}$

$x_d$

FIG 4

w

x

t0   t1   t2 t3   t

# FIG 5